# EUROPEAN PATENT APPLICATION

(11) **EP 2 263 872 A1**
(43) Date of publication of application: **22.12.2010**
(21) Application number: 10166076.9
(22) Date of filing: 15.06.2010
(51) Int. Cl.: B32B 27/36, B32B 29/00, B65D 65/42

(54) **Biodegradable packaging materials with enhanced oxygen barrier performance**

(30) Priority: 16.06.2009 US 187321 P
(71) Applicant: MeadWestvaco Corporation, Richmond, VA 23219-0501 (US)
(72) Inventor: Xu, Qihua, Cary, NC 27519 (US)
(74) Representative: Coulson, Elizabeth Eve

(57) **Abstract**

A biodegradable packaging material (100) having excellent oxygen barrier performance is disclosed. The material includes a biodegradable polymeric structure (101) and a barrier layer (102) positioned on at least one surface of the structure, wherein the barrier layer is derived from a water-based coating composition comprising biopolymer and clay. The biodegradable structure may include homopolymer or copolymer of lactic acid-based monomers. Starch and protein may be used as biopolymers. Clay in the disclosed coating composition may be at least partially exfoliated, have a particle size in range of nanometers, or both. When desired, the disclosed packaging material may include paper-based substrate having the barrier coated biodegradable polymer positioning on at least one of the paper-based substrate.

## Description

### BACKGROUND OF THE INVENTION

There have been increasing environmental concerns on disposing packaging materials after use. Biodegradable polymers, compostable polymers, and similar materials from renewable raw material sources have been explored as substitute materials for the petroleum-based plastics such as polyethylene or polypropylene.

Thermoplastic films such as polypropylene and polyester have been widely used as packaging materials due to their excellent mechanical, heat resistance, and transparency properties. However, their barrier property against oxygen permeability is insufficient as these films have large gas permeability. Therefore, when used for food packaging, these thermoplastic films are commonly laminated with another film having an excellent oxygen barrier property. Several methods have been reported to impart an improved oxygen barrier performance to these thermoplastic films. One method involves using a metal foil lamination such as aluminum foil lamination. This approach, however, has several drawbacks. Aluminum has poor flexibility; therefore, flexural and tensile cracks may occur in the fold regions in a fold-formed package. Additionally, the packaging material containing aluminum is difficult to recycle or incinerate.

The other method involves vapor-depositing the surface of thermoplastic resin film. U.S. Patent Application No. 2004/0076778 discloses a method of producing a biodegradable lamination structure with enhanced oxygen barrier performance. The laminated structure is produced by laminating in the following order: a sealant layer comprising a biodegradable polymer; a barrier layer having an oxygen barrier property; and a barrier layer-supporting substrate layer comprising a biodegradable polymer. The barrier layer is a vapor deposition layer of materials such as silicon oxide, aluminum, and aluminum oxide and aluminum, having a thickness of 1500 angstrom or less.

Yet another method of enhancing the oxygen barrier performance is by using thermoplastic films known for excellent oxygen barrier such as ethylene-vinyl alcohol copolymer. These materials, however, have high sensitivity to moisture and poor adhesion properties to the adjacent layers in a packaging laminate structure. Polypropylene and polystyrene are usually needed in combination with these oxygen barrier films in order to impart moisture resistance and adhesion properties. Such packaging structure is often obtained by laminating polypropylene or polystyrene with multilayer of barrier film made of ethylene-vinyl alcohol copolymer. Polyolefin, polystyrene, and ethylene-vinyl alcohol copolymer are, however, not from renewable raw material sources. Furthermore, they are difficult to decompose or recycle.

U.S. Patent Application No. 2002/0127358 describes a biodegradable packaging laminate structure having excellent water and oxygen barrier performance. The packaging laminate includes (1) at least one liquid-tight layer of homo or copolymers of monomers selected from a group consisting of lactic acid, glycol acid, lactide, glycolide, hydroxy butyric acid, hydroxy valeric acid, hydroxy caproic acid, valerolactone, butyrolactone and caprolactone, and (2) an oxygen gas barrier layer of ethylene vinyl alcohol, polyvinyl alcohol, starch or starch derivatives. These layers may be laminated directly to one another or indirectly by means of interjacent adhesive layers. U.S. Patent Application No. 2007/0042207 discloses a coextruded multi-layer film including at least layer of a modified thermoplastic starch blend that contains more than 1-10% water and at least one layer of a biodegradable polyester. U.S. Patent No. 6,146,750 teaches a biodegradable multilayer structure including a first biodegradable layer made of a biodegradable hydrogen-bonded resin binder and an inorganic laminar compound intercalated in the resin binder wherein the inorganic compound has an aspect ratio of not less than 50 and not more than 5000; and a second biodegradable layer comprising a material selected from the group consisting of polyester poly-3-hydroxybutyrate, 3-hydroxybutyrate-3-hydroxyvalerate copolymers, chitin, and chitosan.

There is still a need for a packaging material that has excellent oxygen barrier performance, yet is easy to decompose or recycle after use.

### SUMMARY OF THE INVENTION

A biodegradable packaging material having excellent oxygen barrier performance is disclosed. The material includes a biodegradable polymeric structure and a barrier layer positioning on at least one surface of the structure, wherein the barrier layer is derived from a water-based coating composition comprising biopolymer binder and clay. The biodegradable structure may include homopolymer or copolymer of lactic acid-based monomers. Starch and protein may be used as biopolymers. Clay in the disclosed coating composition may be at least partially exfoliated in the biopolymer binder, or have a particle size in range of nanometers, or both. When desired, the disclosed packaging material may include paper-based substrate having the barrier coated biodegradable polymer positioning on at least one of the paper-based substrate.

### BRIEF DESCRIPTION OF THE DRAWINGS

Exemplary embodiments of the invention will now be described with reference to the accompanying drawings in which:

FIG.1 is a schematic illustration showing one embodiment of the disclosed packaging material including a biodegradable polymeric substrate and a barrier layer derived from a water-based coating composition positioned on one surface of the polymeric substrate;

FIG. 2 is a schematic illustration showing one embodiment of the disclosed packaging material including a biodegradable polymeric substrate, a topcoat layer, and a barrier layer positioned between the substrate and the topcoat layer;

FIG. 3 is a schematic illustration showing one embodiment of the disclosed packaging material including a biodegradable polymeric substrate, an adhesive layer, a barrier layer positioned between the substrate and the adhesive layer, and a layer of biodegradable layer laminated over the adhesive layer;

FIG. 4 is a graph showing the comparative oxygen barrier properties of an uncoated polylactic acid film (PLA) and the PLA films coated with different coatings;

FIG. 5 is a graph showing the oxygen barrier properties of a commercial PP/EVOH film, an uncoated PLA film, and the PLA films coated with different coatings;

FIG.6 is a graph showing the oxygen barrier properties of PLA films coated with water-based coatings made of protein and nanoclay, wherein the coatings contain different levels of nanoclay; and

FIG.7 is a graph showing the oxygen barrier properties of PLA films coated with water-based coatings made of starch and nanoclay, wherein the coatings contain different levels of nanoclay.

### DETAILED DESCRIPTION OF EXEMPLARY EMBODIMENTS OF THE PRESENT INVENTION

The following detailed description illustrates embodiments of the present invention; however, it is not intended to limit the scope of the appended claims in any manner. It is to be understood that changes and modifications may be made therein as will be apparent to those skilled in the art. Such variations are to be considered within the scope of the invention as defined in the claims.

The packaging material of the present disclosure includes:
(a) a biodegradable polymer structure having opposite sides, and
(b) a barrier layer positioned on at least one side of the biodegradable structure, the barrier layer being derived from a water-based coating composition comprising a biopolymer binder and clay, wherein the clay is characterized by at least partially exfoliated in the biopolymer binder, or a particle size in a range of about 5 nanometers to about 500 nanometers, or both.

In one embodiment, the disclosed packaging material includes:
(a) a biodegradable polymer structure having opposite sides, and
(b) a barrier layer positioned on at least one side of the biodegradable structure, wherein the barrier layer is derived from a water-based coating composition comprising a biopolymer binder and clay at least partially exfoliated in the biopolymer binder.

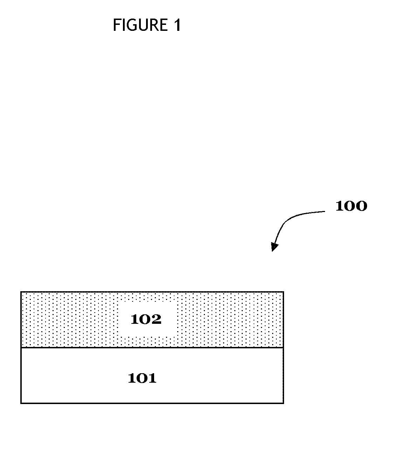

FIG. 1 shows one embodiment of the present disclosure. The packaging material (100) includes a biodegradable polymer structure (101) and a barrier layer (102) positioned on one side of the biodegradable polymer structure (101).

Suitable biodegradable polymer for use in the present disclosure may include, but are not limited to, polyhydroxy alkanoates; and a homopolymer or a copolymer of monomers selected from a group consisting of lactic acid, lactide, glycol acid, glycolide, hydroxy butyric acid, hydroxy valeric acid, hydroxy caproic acid, valerolactone, butyrolactone, caprolactone, and combinations thereof. In some embodiments of the present disclosure, the biodegradable biodegradable polymer may be homopolymer or copolymer of lactic acid-based monomers.

Suitable biopolymers for use in the water-based barrier coating of the present disclosure include, but are not limited to, starch, protein, and combinations thereof.

A variety of clay may be used in the present disclosure. These include, but are not limited to, smectite, phyllosilicate, montmorillonite, saponite, beidellite, montronite, hectorite, stevensite, vermiculite, kaolinite, hallosite, and synthetic phyllosilicate. The clay may be surface treated or non-surface treated. In one embodiment of the present disclosure, the clay in the coating composition is at least partially exfoliated. In one embodiment of the present disclosure, the clay in the coating composition has a particle size in a range of 5-500 nanometers.

The water-based barrier coating may include a film-forming aid such as coalescence agents, plasticizers, and the like. It is well within the ability of one skilled in the art to determine the appropriate pH range, solids level, and film-forming characteristics for such applications. Where desired, the water-based barrier coating may further include additives such as buffers, neutralizers, thickeners or rheology modifiers, humectants, wetting agents, biocides, plasticizers, antifoaming agents, colorants, fillers, waxes, water repellants, slip or mar aids, anti-oxidants, and the like.

The water-based barrier coating may be applied to the biodegradable polymeric substrate by any known coating application methods. Examples of these methods include, but are not limited to, brushing, spraying, roll coating, doctor-blade application, air knife coating, trailing blade coating, curtain coating, and extrusion.

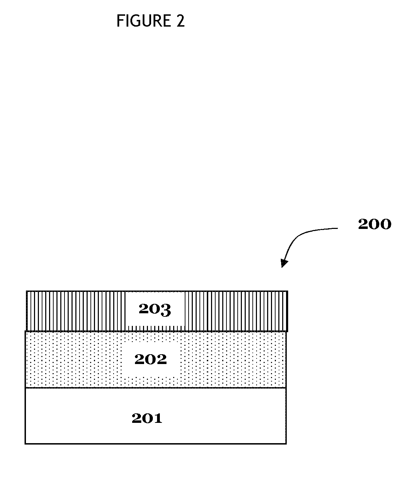

FIG. 2 shows one embodiment of the disclosed packaging material. The biodegradable packaging material (200) includes a biodegradable polymer (201), a topcoat layer (203), and a barrier layer (202) positioned between the substrate (201) and the topcoat layer (203).

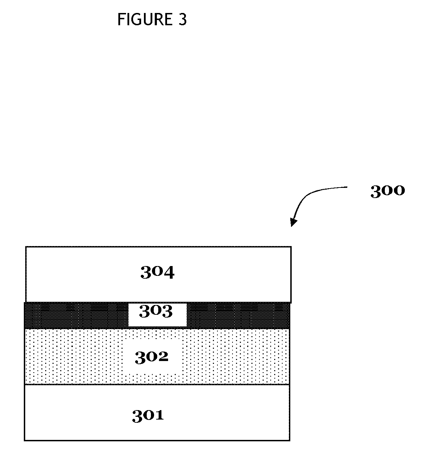

FIG.3 shows one embodiment of the disclosed packaging material. The biodegradable packaging material (300) includes a biodegradable polymer (301), an adhesive layer (303), a barrier layer positioned between the substrate (301) and the adhesive layer (303), and a layer of biodegradable layer (304) laminated over the adhesive layer (303).

In one embodiment, the disclosed packaging material includes:
(a) a paper-based substrate;
(b) a layer of biodegradable polymer structure positioned on at least one side of the substrate; and
(c) a barrier layer positioned over the biodegradable polymer layer, the barrier layer being derived from a water-based coating composition comprising a biopolymer binder and clay, wherein the clay is characterized by at least partially exfoliated in the biopolymer binder, or a particle size in a range of about 5 nanometers to about 500 nanometers, or both.

In one embodiment, the disclosed packaging material includes:
(a) a paper-based substrate;
(b) a layer of biodegradable polymer structure positioned on at least one side of the substrate; and
(c) a barrier layer positioned over the biodegradable polymer layer, wherein the barrier layer is derived from a water-based coating composition comprising biopolymer binder and clay at least partially exfoliated in the biopolymer binder.

### EXPERIMENTS

Water-based barrier coating compositions containing different polymeric binders and clays at different weight ratio were prepared. The PLA film was coated with the selected water-based barrier compositions. Oxygen transmission rate (OTR) is the measurement of the amount of oxygen gas that passes through a substrate over a given period. The OTR was measured at 23°C and 0% RH using Mocon OXTRAN 35 2/21 modules. The coated PLA film was loaded onto the modules and conditioned prior to the OTR measurement. The OTR of the coated PLA films were determined and compared to that of the uncoated PLA film control.

Three types of biopolymers were investigated: a carboxylated soy protein Procote™ 5000 ("Protein") from Protein Technologies International; whey protein isolate ("WP"); and a hydroxyethyl starch Penford Gum 260 ("Starch") from Penford Products Company. Several types of clay were studied: Cloisite Na+ available from Southern Clay ("nanoclay"), kaolin clay ("k-clay") from Imerys, and vermiculite clay from WR Grace.

### Time Interval Study

Four different water-based barrier coating compositions were used as coatings for the PLA film: a coating containing starch/nanoclay ("Starch/Nanoclay Coating"), a coating containing protein/kaolin clay ("Protein/K-clay Coating), a coating containing whey protein isolate /nanoclay ("WP/Nanoclay Coating"), and a barrier coating containing polyester dispersion and nanoclay ("InMat" Coating) commercially available for InMat, Inc. The tested water-based barrier coating composition was applied onto PLA sheet and dried. After conditioning, the coated PLA films were measured for OTR at different time intervals.

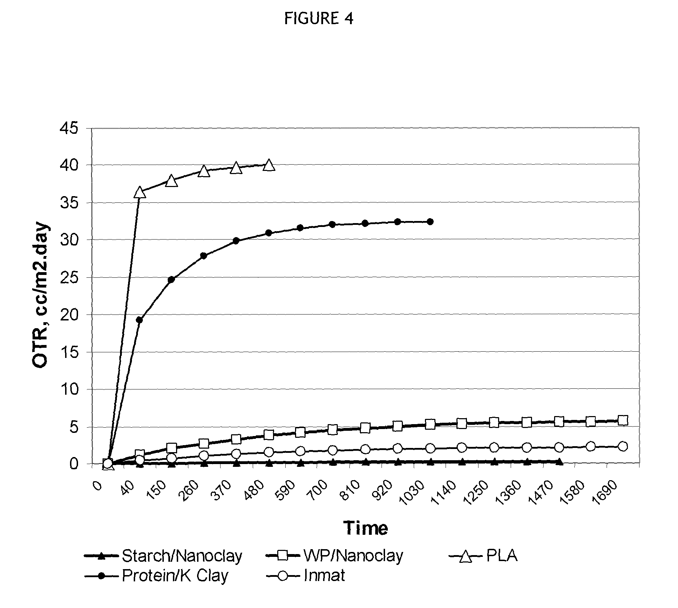

FIG. 4 showed the OTR values of the uncoated and coated PLA films at different time intervals. The coated PLA films had significantly lower OTR values compared to the uncoated PLA film; therefore, the coated PLA films had improved oxygen barrier performance compared to the uncoated PLA films. Furthermore, the coating containing nanoclay imparted far superior oxygen barrier performance to the treated PLA film, compared to the coating containing kaolin clay.

### Different Coating Study

Eight different water-based barrier coating compositions were used as coatings for the PLA film: InMat Coating, polyvinyl alcohol (PVOH), Protein/K-clay Coating, Protein/Nanoclay Coating, Starch/Nanoclay Coatings having 15% ("Starch/Nanoclay15 Coating"), and 53% ("Starch/Nanoclay53 Coating") by weight of nanoclay, a coating containing aqueous dispersion of styrene-butyl acrylate copolymer Acronal® NX 4787X from BASF and nanoclay ("Latex/Nanoclay Coating"), and a barrier coating containing polyvinyl alcohol (PVOH)/vermiculite clay commercially available from NanoPack, Inc. Two controls were used: polypropylene/ethyl-vinyl alcohol polymer (PP/EVOH) film and PLA film. The tested water-based barrier coating composition was applied onto the PLA sheet and dried. After conditioning, the OTR of the coated PLA films were measured and compared to those of two control films at the same time period.

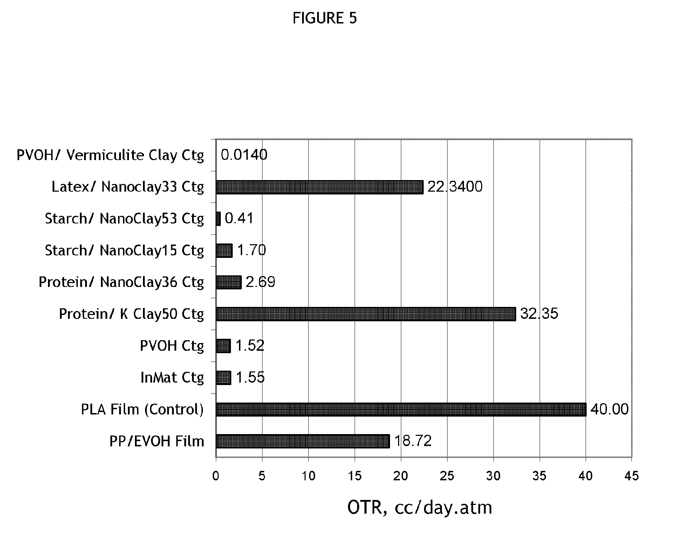

FIG. 5 showed that the coated PLA films had improved oxygen barrier compared to the uncoated PLA film, and in some case to the PP/PVOH film. The degree of an increase in the oxygen barrier performance depends on the types of polymeric binders and clay particles in the coating compositions. Nanoclay provided superior oxygen barrier to K-clay. Starch, Protein, and PVOH binders provided the coating with improved barrier compared to styrene-acrylate latex binder.

### Protein/Nanoclay Coatings Containing Different Levels of Nanoclay

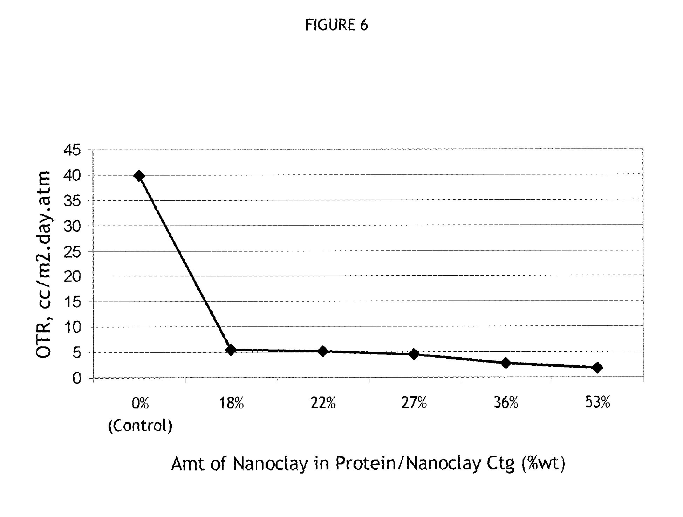

The effect on the oxygen barrier property of nanoclay amounts in the Protein/Nanoclay Coatings was investigated. The coatings contained five different weight percentages for nanoclay were prepared: 18%, 22%, 27%, 36% and 53%. The prepared Protein/Nanoclay Coating was applied onto the PLA sheet and dried. After conditioning, the OTR of the coated PLA films were measured and compared to that of the PLA film coated with only protein (i.e., 0% nanoclay) at the same time period. FIG. 6 showed that the oxygen barrier of the coated PLA films increased as the amount of nanoclay in the Protein/Nanoclay Coatings increased.

### Starch/Nanoclay Coatings Containing Different Levels of Nanoclay

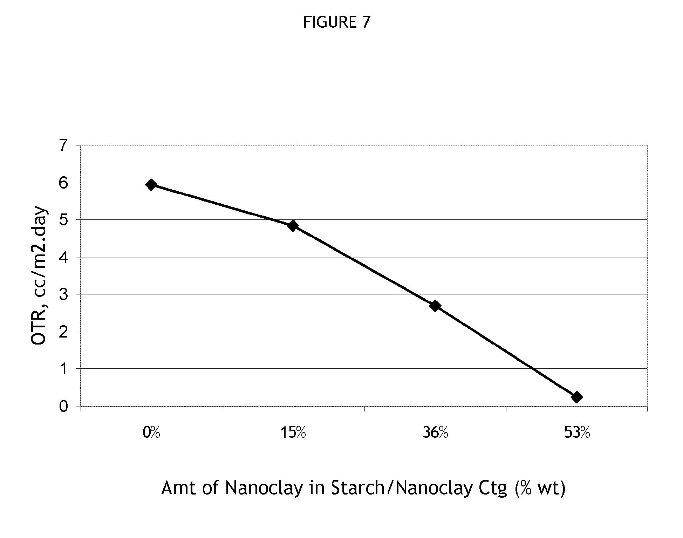

The effect on the oxygen barrier property of nanoclay amount in the Starch/Nanoclay Coatings was investigated. The coatings contained three different weight percentages for nanoclay were prepared: 15%, 36% and 53%. The tested Starch/Nanoclay Coating was applied onto the PLA sheet and dried. After conditioning, the OTR of the coated PLA films were measured and compared to that of the PLA film coated with only starch (i.e., 0% nanoclay) at the same time period. FIG. 7 showed that the oxygen barrier of the coated PLA films increased as the amount of nanoclay in the Starch/Nanoclay Coatings increased.

### Effect of Organic Acid in the Coating Composition

Lactic acid was used as an organic acid and added to the Starch/Nanoclay Coatings containing 15% by weight of nanoclay. The coating was applied to the PLA film. The OTR value of the resulting coated PLA film was determined and compared to those of the uncoated PLA film and the PLA coated with Starch/Nanoclay Coatings containing 15% by weight of nanoclay ("Starch/Nanoclay15").

TABLE 1 showed that the oxygen barrier of the PLA film was increased when the film was coated with the Starch/Nanoclay15 coating. Additionally, the further enhancement of the oxygen barrier performance was achieved when the lactic acid was included in the Starch/Nanoclay15 coating.

**TABLE 1**

| Sample | OTR (cc/m².day.atm) |
|---|---|
| Uncoated PLA Film | 40.00 |
| PLA Film Coated with Starch/Nanoclay15 Ctg | 4.85 |
| PLA Film Coated with Starch/Nanoclay15/Acid Ctg | 1.71 |

### Effect of Plasticizer in the Coating Composition

Glycerol (17% based on total solid) was used as a plasticizer and added to the Starch/Nanoclay Coatings containing 53% by weight of nanoclay. The coating was applied to the PLA film. The OTR value of the resulting PLA film was determined and compared to those of the uncoated PLA film and the PLA coated with Starch/Nanoclay Coatings containing 53% by weight of nanoclay ("Starch/Nanoclay53").

TABLE 2 showed that the oxygen barrier of the PLA film was increased when the film was coated with the Starch/Nanoclay53 coating. The presence of plasticizer in the coating composition somewhat reduced the oxygen barrier performance of the resulting coated PLA film.

**TABLE 2**

| Sample | OTR (cc/m².day.atm) |
|---|---|
| Uncoated PLA Film | 40.00 |
| PLA Film Coated with Starch/Nanoclay53 Ctg | 0.25 |
| PLA Film Coated with Starch/Nanoclay53/Plas. Ctg | 0.41 |

It is to be understood that the foregoing description relates to embodiments that are exemplary and explanatory only and are not restrictive of the invention. Any changes and modifications may be made therein as will be apparent to those skilled in the art. Such variations are to be considered within the scope of the invention as defined in the following claims.

## Claims

1. A packaging material (100; 200; 300), including:
(a) a biodegradable polymeric (101; 201; 301) structure having opposite sides; and
(b) a barrier layer (102; 202; 302) positioned on at least one side of the biodegradable structure, the barrier layer being derived from a water-based coating composition comprising a biopolymer binder and clay, wherein the clay is **characterized by** being at least partially exfoliated in the biopolymer binder, or a particle size in a range of about 5 nanometers to about 500 nanometers, or both.

2. The material of Claim 1, wherein the biodegradable polymeric structure comprises a homopolymer or a copolymer of monomers selected from a group consisting of lactic acid, lactide, glycol acid, glycolide, hydroxvbutyric acid, hydroxyvaleric acid, hydroxycaproic acid, valerolactone, butyrolactone, caprolactone, and combinations thereof.

3. The material of Claim 1, wherein the biodegradable polymeric structure comprises polyhydroxy alkanoate.

4. The material of any of Claims 1 to 3, wherein the clay comprises a member selected from a group consisting of smectite, phyllosilicate, montmorillonite, saponite, beidellite, montronite, hectorite, stevensite, vermiculite, kaolinite, hallosite, synthetic phyllosilicate, and combinations thereof.

5. The material of any of Claims 1 to 4, wherein the biopolymer comprises a member selected from a group consisting of starch, protein, and combinations thereof.

6. The material of any of Claims 1 to 5, further including a topcoat layer (203).

7. The material of any of Claims 1 to 6, further including a top polymeric layer such that the barrier layer is positioned between the biodegradable polymeric structure and the top polymeric layer, the top polymeric layer comprising a homopolymer or a copolymer of monomers selected from a group consisting of lactic acid, lactide, glycol acid, glycolide, hydroxvbutyric acid, hydroxyvaleric acid, hydroxycaproic acid, valerolactone, butyrolactone, caprolactone, and combinations thereof

8. The material of Claim 7, further including an adhesive layer (303) positioned between the barrier layer and the top polymeric layer.

9. The material of Claim 8, wherein the adhesive layer comprises a member selected from the group consisting of ethylene vinyl acetate and polyvinyl acetate.

10. A packaging material (100; 200; 300), including:
(a) a paper-based substrate having opposite sides;
(b) a biodegradable polymer layer (101; 201; 301) positioned on at least one side of the paper-based substrate; and
(c) a barrier layer (102; 202; 302) positioned over the biodegradable polymer layer, the barrier layer being derived from a water-based coating composition comprising a biopolymer and clay, wherein the clay is **characterized by** being at least partially exfoliated in the biopolymer binder, or a particle size in a range of about 5 nanometers to about 500 nanometers, or both.

11. The material of Claim 10, wherein the biodegradable polymer layer comprises a
homopolymer or a copolymer of monomers selected from a group consisting of lactic acid, lactide, glycol acid, glycolide, hydroxvbutyric acid, hydroxyvaleric acid, hydroxycaproic acid, valerolactone, butyrolactone, caprolactone, and combinations thereof.

12. The material of Claim 10, wherein the biodegradable polymer layer comprises
polyhydroxy alkanoate.

13. The material of any of Claims 10 to 12, wherein the clay comprises a member
selected from a group consisting of smectite, phyllosilicate, montmorillonite, saponite, beidellite, montronite, hectorite, stevensite, vermiculite, kaolinite, hallosite, synthetic phyllosilicate, and combinations thereof.

14. The material of any of Claims 10 to 13, wherein the biopolymer comprises a member selected from a group consisting of starch, protein, and combinations thereof.
